(19) Europäisches Patentamt / European Patent Office / Office européen des brevets

(11) **EP 2 556 610 B1**

(12) **EUROPEAN PATENT SPECIFICATION**

(45) Date of publication and mention
of the grant of the patent:
**15.03.2023  Bulletin 2023/11**

(21) Application number: **11766171.0**

(22) Date of filing: **07.04.2011**

(51) International Patent Classification (IPC):
$H04J\ 11/00^{(2006.01)}$    $H04L\ 1/16^{(2006.01)}$
$H04W\ 72/12^{(2009.01)}$    $H04L\ 1/00^{(2006.01)}$
$H04L\ 1/18^{(2006.01)}$    $H04L\ 5/00^{(2006.01)}$

(52) Cooperative Patent Classification (CPC):
**H04L 1/0031; H04L 1/1671; H04L 1/1861;
H04L 5/0055; H04L 5/0057; H04W 72/21**

(86) International application number:
**PCT/KR2011/002449**

(87) International publication number:
**WO 2011/126320 (13.10.2011 Gazette 2011/41)**

(54) **APPARATUS AND METHOD FOR TRANSMITTING UPLINK SCHEDULING REQUEST IN MOBILE COMMUNICATION SYSTEM**

VORRICHTUNG UND VERFAHREN ZUR ÜBERTRAGUNG VON UPLINK-PLANUNGSANFRAGEN IN EINEM MOBILEN KOMMUNIKATIONSSYSTEM

APPAREIL ET PROCÉDÉ DE TRANSMISSION D'UNE DEMANDE DE PROGRAMMATION DE LIAISON MONTANTE DANS UN SYSTÈME DE COMMUNICATION MOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **07.04.2010  CN 201010142068**

(43) Date of publication of application:
**13.02.2013  Bulletin 2013/07**

(73) Proprietor: **Samsung Electronics Co., Ltd.
Gyeonggi-do 443-742 (KR)**

(72) Inventors:
• **HE, Hong
  Beijing 100125 (CN)**
• **LI, Yingyang
  Beijing 100085 (CN)**
• **SUN, Chengjun
  Beijing 100125 (CN)**

(74) Representative: **Nederlandsch Octrooibureau
P.O. Box 29720
2502 LS The Hague (NL)**

(56) References cited:
**US-A1- 2006 079 257     US-A1- 2009 181 691
US-A1- 2009 196 247     US-A1- 2009 201 869
US-A1- 2009 274 100     US-A1- 2009 316 811**

• **HUAWEI ET AL: "Multiplexing of Scheduling
Request Indicator", 3GPP DRAFT; R1-073521
MULTIPLEXING OF SCHEDULING REQUEST
INDICATOR, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE, vol. RAN
WG1, no. Athens, Greece; 20070815, 15 August
2007 (2007-08-15), XP050107127, [retrieved on
2007-08-15]**

**Description**

**Technical Field**

The present invention relates to mobile communication technologies, and more particularly to a method for transmitting an uplink scheduling requirement.

**Background Art**

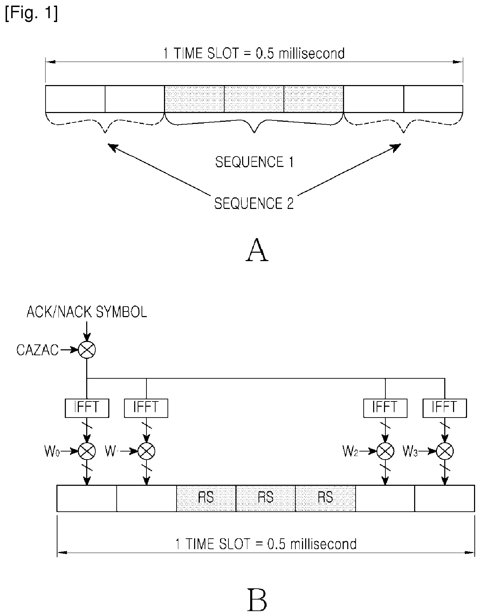

In Long Term Evolution (LTE) systems, uplink control information includes acknowledgement/non-acknowledgement (ACK/NACK) of a downlink data packet, a Channel Quality Indicator (CQI), a Rank Indicator (RI) for downlink Multi-input Multi-output (MIMO) feedback, a Precoding Matrix Indicator (PMI) and a scheduling request (SR). Similar to the structure of a uplink ACK/NACK control channel shown in FIG. 1b, the structure of a uplink SR control channel for transmitting SR information, as shown in FIG. la, is a two-dimension orthogonalization channel structure of different circular shifts and time domain orthogonal grouping expansion of a basic Constant Amplitude Zero Auto Correlation (CAZAC) sequence. In the LTE system, fixed SR resources are distributed to each UE for sending the SR information, and each SR is sent by using a method of On-Off Key (OOK).

In the LTE system, when needing to apply a new uplink resource scheduling, the UE sends a SR a modulation symbol of which is $d(0) = 1$ in a SR subframe configured by the UE, so as to request a new uplink data resource. The SR in this case is called as a positive SR. When the UE does not have uplink resource scheduling requirement, the SR is not sent on a distributed SR channel. The SR in this case is called as a negative SR. In order to ensure a low Constant Modulus (CM) characteristic of uplink signals, it is defined in the LTE system that, if the SR and the ACK/NACK are transmitted in the same sub-frame at it happens, for the positive SR, the UE sends the ACK/NACK on the distributed SR channel; for the negative SR, the UE sends the ACK/NACK on a distributed ACK/NACK channel.

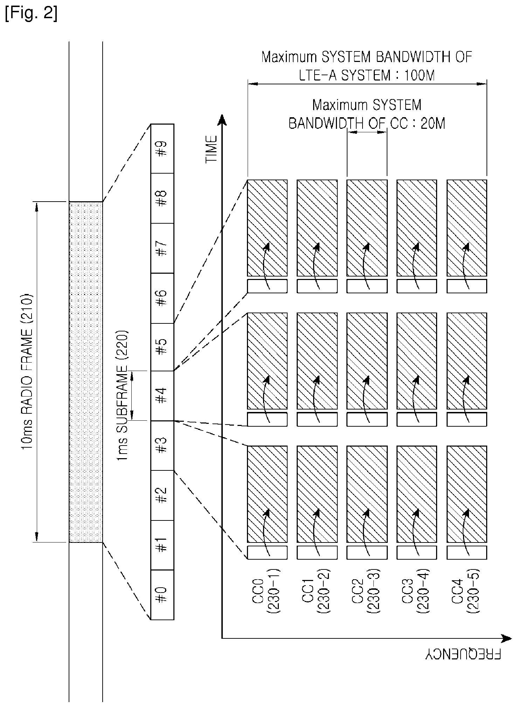

Along with the continuous evolution of the LTE technology, enhanced LTE (LTE-A) systems appear. In the LTE-A system, in order to improve peak speed rate of the whole system, a method of Carrier Aggregation (CA) is used to implement configurable system bandwidth, and each carrier unit is called as a Component Carrier (CC). LTE User Equipment (UE) can work normally at each CC, which is specifically shown in FIG. 2.

FIG. 2 is a schematic diagram illustrating a structure of a radio frame in a mobile communication system. Referring to FIG. 2, a radio frame 210 includes a plurality of subframes 220. A length of the radio frame 210 may be 10 ms, and a length of the subframe 220 may be 1 ms. The subframe 220 consists of a plurarity of CCs 230-1 to 230-5 in frequenty domain. A bandwidth of each of the CCs 230-1 to 230-5 may be 20 M, and total bandwidth may be 100M.

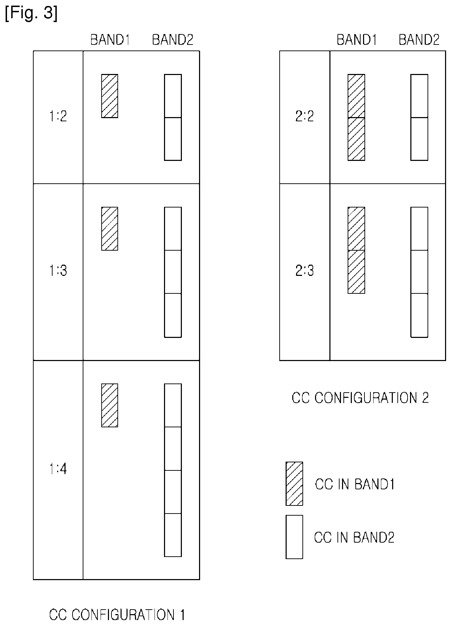

In view of partition of conventional radio spectrum, in a recent conference of 3GPP RAN 4 work groups, operators of the LTE-A system distribute the CC configured in the further LTE-A system to two different frequency bands, which is specifically shown in FIG. 3. In addition, in order to reduce complexity of LTE-A terminals, it is defined in the LTE-A criterion by the 3GPP RAN4 that, in the future LTE-A system, when the UE configures multiple downlink and uplink CCs, all the SR and CQI information are sent in the same CC, downlink data ACK/NACK of different CCs are sent in a certain single CC. Since it is important to ensure the low CM characteristic of the uplink single CC for a receiving capability of uplink control information, there is a technical problem needed to be solved currently that how to return the SR, ACK/NACK or CQI information to an BS at the same time when uplink CM is reduced as much as possible. However, in the prior art, no method is provided for returning the SR, ACK/NACK or CQI information to the BS when the low CM characteristic of the uplink CC is ensured as much as possible.

US2009/0196247 relates to Systems and methodologies that facilitate simultaneous transmission of control information in a single sub-frame. For instance, simultaneous transmission can maintain single carrier waveforms for a control channel even when a plurality of information types is scheduled in concurrently.

US2009/0274100 relates to management of uplink resources comprises receiving a multi-bit acknowledge (multi-bit A/N) that is available for uplink transmission and receiving other information that is available for uplink transmission along with the multi-bit A/N. Next, it is determined whether a condition has been met. If the condition has been met, an uplink message is created comprising the multi-bit A/N but dropping the other information. If the condition has not been met, an uplink message is created which jointly codes the multi-bit AN and the other information. The uplink message is then transmitted to a receiver.

US2009/020189 relates to a communication system that incorporates a multiplexing scheme so that a base node that schedules user equipment (UE) can determine whether an ACK/NACK and/or a service request (SR) has been received when both uplink (UL) transmissions are simultaneously scheduled.

XP050107127, HUAWEI ET AL: "Multiplexing of Scheduling Request Indicator", 3GPP DRAFT; R1-073521 MULTIPLEXING OF SCHEDULING REQUEST INDICATOR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20070815, 15 August 2007 (2007-08-15) relates to the transmission of SRI and the multiplexing of SRI with other UL control signalling.

**Disclosure of Invention**

**Solution to Problem**

The invention is set out in the appended set of claims.

**Brief Description of Drawings**

FIG. la is a schematic diagram illustrating a SR control channel in a mobile communication system,
FIG. 1b is a schematic diagram illustrating a uplink ACK/NACK control channel in a mobile communication system,
FIG. 2 is a schematic diagram illustrating a structure of a radio frame in a mobile communication system,
FIG. 3 is a schematic diagram illustrating examples of CC allocations in a mobile communication system,
FIG. 4 illustrates a SR transmission procedure in a mobile communication system according to an embodiment of the present invention,
FIG. 5 illustrates a joint coding procedure based on a mode 1 in a mobile communication system providing examples,
FIGs. 6 and 7 illustrate a data processing procedure based on a mode 1 in a mobile communication system providing examples,
FIG. 8 illustrates a operation procedure based on a mode 2 in a mobile communication system according to an embodiment of the present invention,
FIG. 9 illustrates a data processing procedure based on a mode 2 in a mobile communication system according to an embodiment of the present invention,
FIG. 10 illustrates a data processing procedure based on a mode 3 in a mobile communication system providing examples.
FIG. 11 illustrates a SR transmission procedure in a mobile communication system providing examples,
FIG. 12 illustrates a data processing procedure in a mobile communication system providing examples.
FIG. 13 illustrates a block diagram of a UE in a mobile communication system according to an embodiment of the present invention.

**Best Mode for Carrying out the Invention**

The present invention will be illustrated in detail hereinafter with reference to the accompanying drawings and specific embodiment to make the objects, technical solutions and merits of the present invention more clear.
Embodiments of the present invention provide an apparatus and a method for transmitting an uplink SR information in a mobile communication system. Hereinafter, the present inventon uses technical terms and representations defined in LTE standard. However, the present invention does not limited the technical terms and representations, and is applicable to communication system based on another standard.

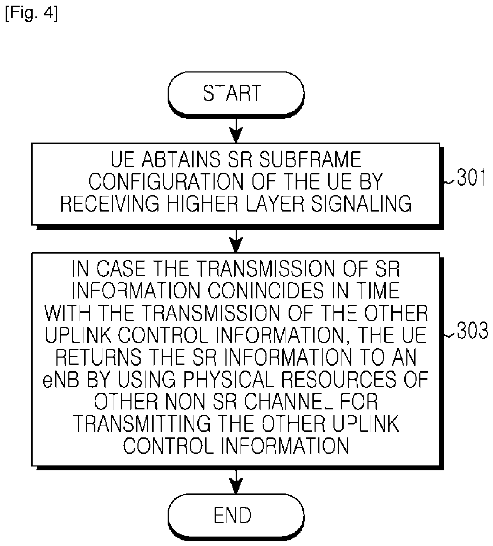

FIG. 4 illustrates a SR transmission procedure in a mobile communication system according to an embodiment of the present invention.
Referring to FIG. 4, in Step 301, UE obtains SR subframe configuration of the UE by receiving higher layer signaling. For example, the SR subframe configuration includes a SR configuration number. The UE may determine a SR subframe by using the obtained SR configuration number, a table stored by the UE and existed system specification. The table stored by the UE may be defined as shown in Table 1 below.

Table 1

[Table 1]

| Table 1 | | |
|---|---|---|
| SR subframe configuration number $I_{SR}$ | SR cycle (millisecond) $SR_{PERIODICITY}$ | SR subframe offset $N_{OFFSET,SR}$ |
| 0 - 4 | 5 | $I_{SR}$ |
| 5 - 14 | 10 | $I_{SR}$ - 5 |

(continued)

| Table 1 | | |
| --- | --- | --- |
| SR subframe configuration number $I_{SR}$ | SR cycle (millisecond) $SR_{PERIODICITY}$ | SR subframe offset $N_{OFFSET,SR}$ |
| 15 - 34 | 20 | $I_{SR}$ - 15 |
| 35 - 74 | 40 | $I_{SR}$ - 35 |
| 75 - 154 | 80 | $I_{SR}$ - 75 |
| 155 - 156 | 2 | $I_{SR}$ - 155 |
| 157 | 1 | $I_{SR}$ - 157 |

The determing of the SR subframe includes that make the serial number of the determined SR subframe satisfy the following Equation 1.

$$\left(10 \times n_f + \lfloor n_s / 2 \rfloor - N_{OFFSET,SR}\right) \bmod SR_{PERIODICITY} = 0 \; ; \qquad \text{Equation (1)}$$

In Equation (1), $n_f$ denotes a system frame number, $n_s$ denotes a time slot number, $N_{OFFSET,SR}$ denotes an offset of a SR subframe, $SR_{PERIODICITY}$ denotes a cycle of SR subframes. In the embodiment, the SR configuration number obtained by the UE is $I_{SR}=3$, it is can be obtained according to the following table 1 that $N_{OFFSET,SR} = 3$, $SR_{PERIODICITY} = 5$, and $n_s =\{0,1,...,19\}$ is time slot numbers.

According to the Equation 1, the UE obtains that a uplink resource SR is to be sent in the subframe #3, #8, #11, #14, ... and etc., so as to request a Base Station (BS) to reallocate uplink data resources. Herein, the BS may be referd as 'eNodeB (eNB)'. In order to accurately describe the method in the present invention which is performed when the SR information and other control information are transmitted in a single subframe at the same time, in the undermentioned embodiments, only subframe #3 is taken as an example, and the principles of other subframes are similar.

In step 303, in case the transmission of SR information coincides in time with the transmission of the other uplink control information, the UE returns the SR information to the BS by using physical resources of other non SR channel for transmitting the other uplink control information. That is to say, in step 303, in case the transmission of SR information coincides in time with the transmission of the other uplink control information, i.e. the subframe #3, the UE returns the SR information to the BS by using the physical resources of the non SR channel for transmitting the other uplink control information.

It should be explained that, the methods provided by the embodiments of the present invention mainly aim at how to return the SR, ACK/NACK or CQI information to the BS at the same time when uplink CM is reduced as much as possible, if the UE cons multiple CCs, especially the multiple CCs are located at different bands. It is can be seen that the other uplink control information in step 303includes: ACK/NACK information, CQI information. In order to make the technical solutions provided by the embodiments of the present invention more clear, it is described in detail that operations respectively corresponding to transmitting the SR information and the ACK/NACK information in the same subframe, i.e. the subframe #3 (referred as a first embodiment) and transmitting the SR information and the CQI information in the same subframe, i.e. the subframe #3 (referred as a second embodiment).

The first embodiment:

Solutions according to The first embodiment may be implemented by using the following three modes in the first case.

Mode 1:

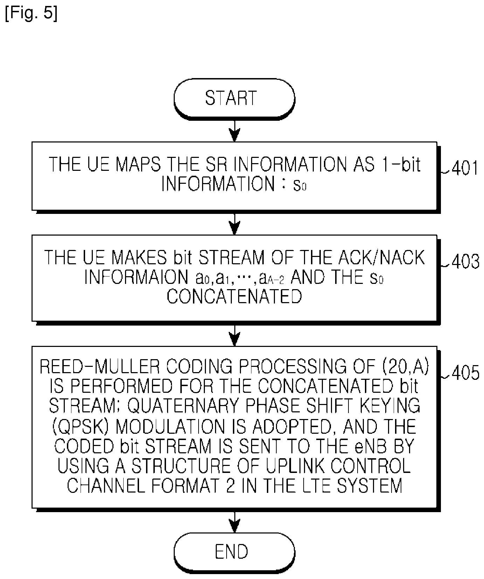

In this embodiment, when transmitting the SR information and the ACK/NACK information at the same subframe, the UE performs joint coding for the SR information and the ACK/NACK information, and returns these by using an ACK/NACK channel distributed to the UE. The operation of performing the joint coding for the SR information and the ACK/NACK information by the UE is illustrasted in FIG. 5.

FIG. 5 illustrates a joint coding procedure based on a mode 1 in a mobile communication system providing examples .

Referring to FIG. 5, in step 401, the UE maps the SR information as bit information $s_0$. Specifically, the step

4

401 includes that: when the SR information is a positive SR, $s_0 = 1$, when the SR information is a negative SR, $s_0 = 0$. Other mapping modes may be adopted in step 401, and only one example is provided to make the present invention more clear.

In step 403, the UE makes bit stream of the ACK/NACK information $a_0, a_1, ..., a_{A-2}$ and the $s_0$ concatenated. The step 403 may include that: the $s_0$ and the bit stream of the ACK/NACK information $a_0, a_1, ..., a_{A-2}$ are located at predetermined locations. Specifically, the UE makes the $s_0$ located in front of the bit stream of the ACK/NACK information $a_0, a_1, .., a_{A-2}$, and obtains $< s_0, a_0, a_1, ..., a_{A-2} >$, or the UE makes $s_0$ be appended at the end of the sequence of the concatenated bit stream of the ACK/NACK information $a_0, a_1, ..., a_{A-2}$, and obtains $< a_0, a_1, ..., a_{A-2}, s_0 >$.

In step 405, Reed-Muller coding processing of (20, A) is performed for the concatenated bit stream. Herein, (r, m) are RM coding parameters and denote that an order is $r$, and a length of a binary vector is $2^m$. Quaternary Phase Shift Keying (QPSK) modulation is adopted, and the coded bit stream is sent to the BS. For example the coded bit stream is sent by using a structure of uplink control channel format 2 in the LTE system.

Thus, the flow of the UE performing joint coding for the SR information and the ACK/NACK information in the embodiment of the present invention is implemented.

In order to make the above mode 1 more clear, a specific embodiment is provided.

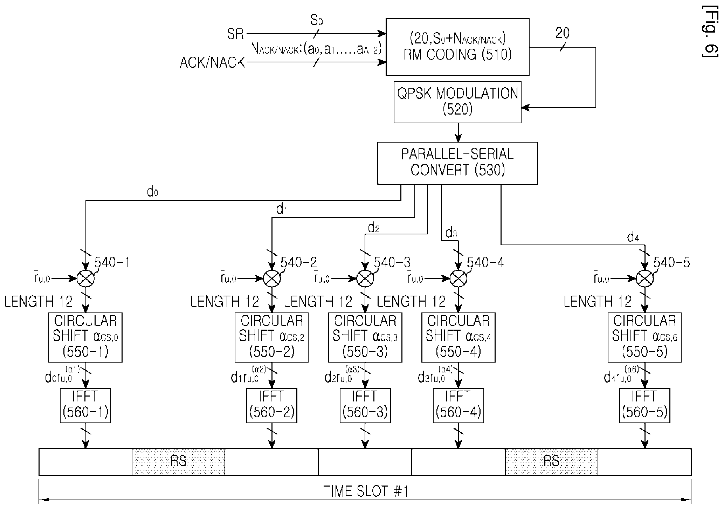

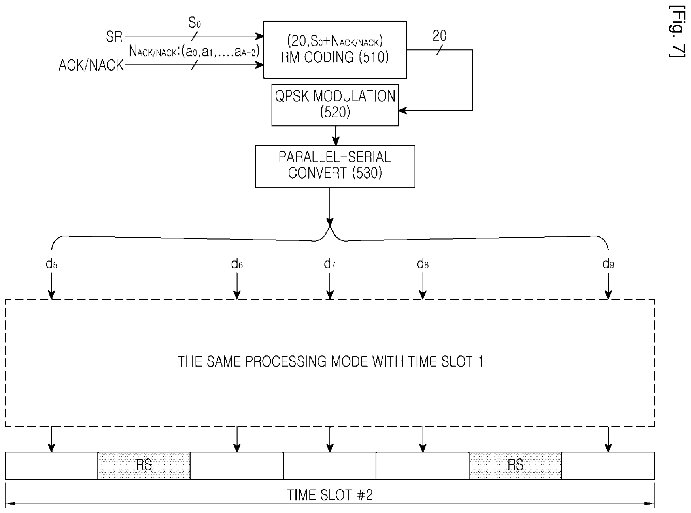

FIGs. 6 and 7 illustrate a data processing procedure based on a mode 1 in a mobile communication system providing examples.

Referring to FIGs 6 and 7, the SR information and the ACK/NACK information is provided to a RM coding block 510, and a result of RM coding is provided to QPSK modulationg block 520. Modulated symbols modulated by the QPSK modulation block 520 are converted to a parallel symbol stream in a parallel-serial convert block 530, and 10 symbols included the parallel symbol stream are provided to multipliers 540-1 to 540-5 coresponding to a time slot #1 and multipliers (not illustrated) coresponding to a time slot #2. In each of the multipliers 540-1 to 540-5, a base sequence $\overline{r}_{u,0}$ is multiplied with each symbol, and each symbol is cyclic shifted as $\alpha_{cs,0}$ by a circular shift block 550. Symbols which

is multiplied by $\overline{r}_{u,0}$ and is cyclic shifted $\alpha_{cs,0}$ may be represented $d_0 r_{u,0}^{\alpha 1}$, $d_1 r_{u,0}^{\alpha 2}$, $d_2 r_{u,0}^{\alpha 3}$, and so on. Herein, $r_{u,v}^{(\alpha)}$ denotes a reference signal sequence. After that, symbols multiplied by the reference signal sequence pass an Inverse Fast Fourier Transform (IFFT) block 560, and are mapped in time slots.

In FIGs 6 and 7, it is supposed that the UE needs to request the BS to reallocate uplink resources, i.e. the UE needs to send a positive SR in the subframe #3. According to step 401, it is obtained that $S_0 = 1$; at the same time, the UE also needs to return ACK/NACK information corresponding to that the BS configures multiple CCs in the subframe #3. It is supposed in the embodiment of the present invention that the length of ACK/NACK information bits to be sent is $A$-1, the ACK/NACK information bits are $\langle a_0, a_1, ........, a_{A-2} \rangle$, without lost of generality, for the sake of convenience, it is taken as an example that $A = 9$, and the bit stream of the ACK/NACK information to be sent is $\langle 01\ 11\ 10\ 10 \rangle$. The UE makes SR information bit, i.e. $S_0$ and the ACK/NACK information bits, i.e. the $\langle 01\ 11\ 10\ 10 \rangle$ concatenated. It is supposed that, in this embodiment, the SR information bit is located in front of the ACK/NACK information bits, thus the concatenated bit stream of ACK/NACK and SR bits is $\langle c_0, c_1, ......, c_{A-1} \rangle = \langle 1\ 01\ 11\ 10\ 10 \rangle$. Afterwards, RM coding of (20, A) is performed for the bit stream output after the concatenation (recorded as $\langle b_0, b_1, ......, b_{19} \rangle$), specifically,

$$b_i = \sum_{n=0}^{8} \left( c_n \cdot M_{i,n} \right) \bmod 2$$

herein, i = 0, 1, 2, …, 19.          Equation (2)

In Equation (2), $b_i$ denotes ith bit of RM coded bit stream, n denotes a bit index, $c_n$ denotes nth bit of concatenated bit stream of ACK/NACK and SR, and $M_{i,n}$ denotes a parameter for RM coding. The $M_{i,n}$ may be defined as shown in Table 2 below.

Table 2

[Table 2]

| Table 2 | | | | | | | | | | | | | |
|---|---|---|---|---|---|---|---|---|---|---|---|---|---|
| i | $M_{i,0}$ | $M_{i,1}$ | $M_{i,2}$ | $M_{i,3}$ | $M_{i,4}$ | $M_{i,5}$ | $M_{i,6}$ | $M_{i,7}$ | $M_{i,8}$ | $M_{i,9}$ | $M_{i,10}$ | $M_{i,11}$ | $M_{i,12}$ |
| 0 | 1 | 1 | 0 | 0 | 0 | 0 | 0 | 0 | 0 | 0 | 1 | 1 | 0 |
| 1 | 1 | 1 | 1 | 0 | 0 | 0 | 0 | 0 | 0 | 1 | 1 | 1 | 0 |
| 2 | 1 | 0 | 0 | 1 | 0 | 0 | 1 | 0 | 1 | 1 | 1 | 1 | 1 |
| 3 | 1 | 0 | 1 | 1 | 0 | 0 | 0 | 0 | 1 | 0 | 1 | 1 | 1 |
| 4 | 1 | 1 | 1 | 1 | 0 | 0 | 0 | 1 | 0 | 0 | 1 | 1 | 1 |
| 5 | 1 | 1 | 0 | 0 | 1 | 0 | 1 | 1 | 1 | 0 | 1 | 1 | 1 |
| 6 | 1 | 0 | 1 | 0 | 1 | 0 | 1 | 0 | 1 | 1 | 1 | 1 | 1 |
| 7 | 1 | 0 | 0 | 1 | 1 | 0 | 0 | 1 | 1 | 0 | 1 | 1 | 1 |
| 8 | 1 | 1 | 0 | 1 | 1 | 0 | 0 | 1 | 0 | 1 | 1 | 1 | 1 |
| 9 | 1 | 0 | 1 | 1 | 1 | 0 | 1 | 0 | 0 | 1 | 1 | 1 | 1 |
| 10 | 1 | 0 | 1 | 0 | 0 | 1 | 1 | 1 | 0 | 1 | 1 | 1 | 1 |
| 11 | 1 | 1 | 1 | 0 | 0 | 1 | 1 | 0 | 1 | 0 | 1 | 1 | 1 |
| 12 | 1 | 0 | 0 | 1 | 0 | 1 | 0 | 1 | 1 | 1 | 1 | 1 | 1 |
| 13 | 1 | 1 | 0 | 1 | 0 | 1 | 0 | 1 | 0 | 1 | 1 | 1 | 1 |
| 14 | 1 | 0 | 0 | 0 | 1 | 1 | 0 | 1 | 0 | 0 | 1 | 0 | 1 |
| 15 | 1 | 1 | 0 | 0 | 1 | 1 | 1 | 1 | 0 | 1 | 1 | 0 | 1 |
| 16 | 1 | 1 | 1 | 0 | 1 | 1 | 1 | 0 | 0 | 1 | 0 | 1 | 1 |
| 17 | 1 | 0 | 0 | 1 | 1 | 1 | 0 | 0 | 1 | 0 | 0 | 1 | 1 |
| 18 | 1 | 1 | 0 | 1 | 1 | 1 | 1 | 1 | 0 | 0 | 0 | 0 | 0 |
| 19 | 1 | 0 | 0 | 0 | 0 | 1 | 1 | 0 | 0 | 0 | 0 | 0 | 0 |

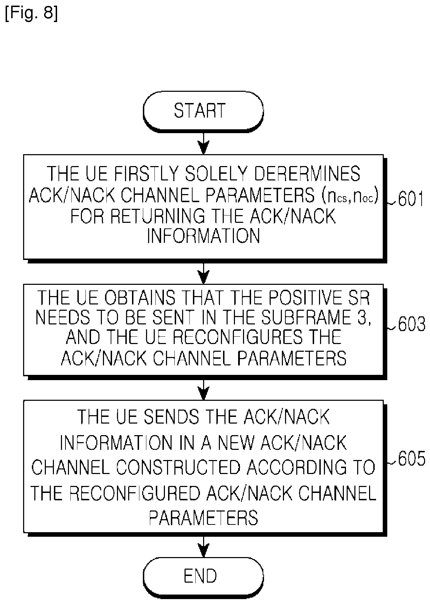

After RM coding, the UE performs QPSK modulation for the coded bit stream $\langle b_0,b_1,......,b_{19}\rangle$, and obtains a modulation symbol $\langle d_0,d_1,......,d_9\rangle$, and then returns the modulation symbol $\langle d_0,d_1,......,d_9\rangle$ to the 13 SR is to be sent in the subframe #3, i.e. $S_0$ =1; in addition, the UE also needs to return ACK/NACK information corresponding to that the BS configures multiple CCs in the subframe #3. As illustrated in FIG. 8, the process includes the following steps.

In step 601, the UE firstly solely determines ACK/NACK channel parameters $<n_{cs},n_{oc}>$ for returning the ACK/NACK information. Herein, $n_{cs}$ denotes a cyclic shift index and the $n_{oc}$ denotes a orthogonal sequence index. It is supposed, in the embodiment, that the ACK/NACK channel parameters determined by the UE are $n_{cs}$ =6, $n_{oc}$ =0. According to relationship between $n_{oc}$ and time domain orthogonal extended codes as shown in following table 3, it is obtained that when $n_{cs}$ =6, $n_{oc}$ =0, the sequence 0 is taken as the time domain orthogonal extended code, i.e. [+1 +1 +1 +1 ]. For example, orthogonal codes corresponding to sequence index may be defined as shown in Table 3 below.

## Table 3

[Table 3]

Table 3

| $n_{oc}$ | Orthogonal code sequence $[w(0) \quad w(1) \quad w(2) \quad w(3)]$ |
|---|---|
| 0 | [ +1    +1    +1    +1] |
| 1 | [ +1    -1    +1    -1] |
| 2 | [ +1    -1    -1    +1] |
| 3 | [ -1    +1    -1    +1] |

In step 603, the UE obtains that the positive SR needs to be sent in the subframe #3, and the UE reconfigures the ACK/NACK channel parameters.

The ACK/NACK channel parameters reconfigured by the UE are $n_{cs}$ =6, $n_{oc}$ =3, i.e. the index of CS is not changed, and the ACK/NACK channel is constructed by using a fixed orthogonal extended code $n_{oc}$ =3 (orthogonal extended code is [-1 +1 -1 +1]) which is not used in conventional solutions.

In step 605, the UE sends the ACK/NACK information in a new ACK/NACK channel constructed according to the reconfigured ACK/NACK channel parameters.

It should be explained that, in the above operations, if the UE determines that it is unnecessary to request the BS to reallocate the uplink resources, i.e. the UE needs to send the negative SR in the current subframe #3, then the UE does not need to reconfigured, the ACK/NACK channel parameters of the UE, i.e. the UE does not perform any operation, but returns the ACK/NACK information by using the original ACK/NACK channel.

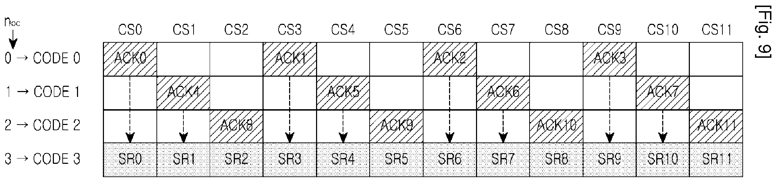

The above mode 2 is illustrated by FIG. 9. FIG. 9 illustrates a data processing procedure based on a mode 2 in a mobile communication system according to an embodiment of the present invention, Referring to FIG. 9, the ACK/NACK information is generated by using code 0, code 1 or code 2 when not transmitting the SR information, and the ACK/NACK information is generated by using code 3 when transmitting the SR information.

Mode 3:

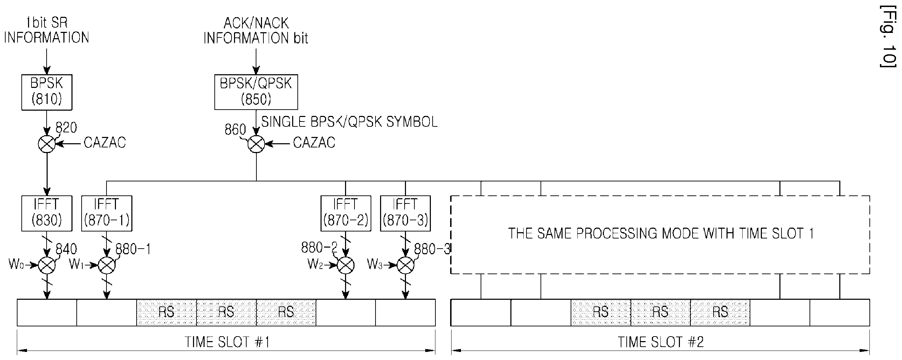

The mode 3 is relatively simple, specifically, when the SR information and the ACK/NACK information are transmitted in the same subframe, the UE performs coding modulation for the SR information, and returns the SR information to the BS by using channel resources of one OFDM symbol in the uplink ACK/NACK channel structure in the LTE system. The channel resources of the OFDM symbol include a CAZAC code and an orthogonal code sequence of a time domain. The mode 3 is illustrated by FIG. 10.

FIG. 10 illustrates a data processing procedure based on a mode 3 in a mobile communication system providing examples .

Referring to FIG. 10, 1 bit SR information is BPSK modulated in BPSK block 810, and is multiplied by a CAZAC sequence in a multiplier 820. After that, a symbol multiplied by the CAZAC seqeuence is provided to an IFFT block 830, is multiplied by an orthogonal code 0 in a multiplier 840, and is mapped into time slots. The ACK/NACK information bits are BPSK or QPSK modulated in BPSK/QPSK block 850, and are multiplied by a CAZAC sequence in a multiplier 860. After that,symbols multiplied by the CAZAC seqeuence are provided to IFFT blocks 870-1 to 870-3, are multiplied by an orthogonal code 1, an orthogonal code 2 or an orthogonal code 3 in multipliers 880-1 to 880-3, and are mapped into time slots.

The implemented modes of the first embodiment, i.e. transmitting the SR information and the ACK/NACK information in the same subframe are described. The second embodiment, i.e. transmitting the SR information and the CQI information in the same subframe are described hereinafter.

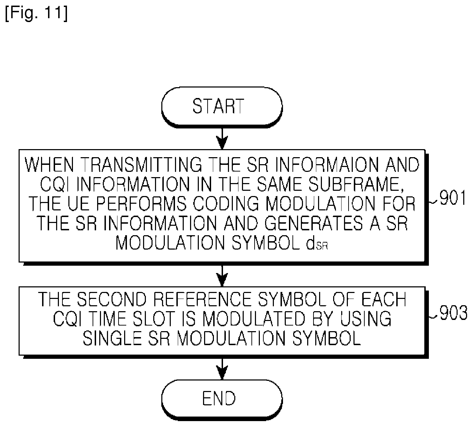

FIG. 11 illustrates a SR transmission procedure in a mobile communication system providing examples .

Referring to FIG. 11, in step 901, when transmitting the SR information and the CQI information in the same subframe, the UE performs coding modulation for the SR information and generates a SR modulation symbol $d_{SR}$. Specifically, performing coding modulation for the SR information and generating the SR modulation symbol $d_{SR}$ may include: mapping the SR information as bit information $s_0$, and performing Binary Phase Shift Keying (BPSK) modulation for the bit information $s_0$ to generate the SR modulation symbol $d_{SR}$. The operation for mapping the SR information as the bit information $s_0$ may refer to the above step 401.

In step 903, a second reference symbol of each CQI time slot is modulated by using single SR modulation symbol $d_{SR}$. That is, the second reference symbol of each CQI time slot is generated by using SR modulation symbol $d_{SR}$. Therefore, the second reference symbol of each CQI time slot includes the SR information.

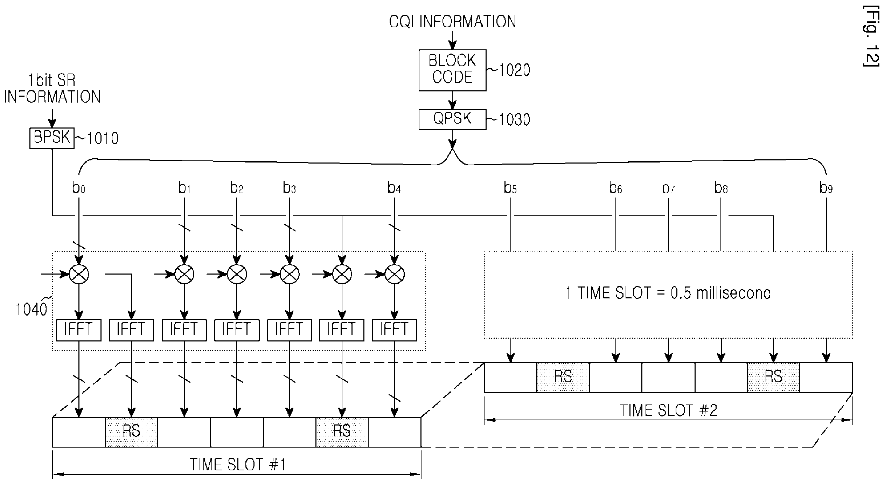

FIG. 12 illustrates a data processing procedure in a mobile communication system providing examples . Referring to FIG. 12, 1 bit SR information is modulated in a BPSK block 1010. The CQI information is block coded in a block code block 1120, and is QPSK modulated in QPSK block 1030. After that, a SR information symbol and CQI information symbols are provided multiplying and IFFT block 1040. The SR information symbol passes though a multiplying operation and IFFT operation, and is output as the second reference symbol of each CQI time slot. The CQI information symbols and the SR information symbol are mapped into time slots.

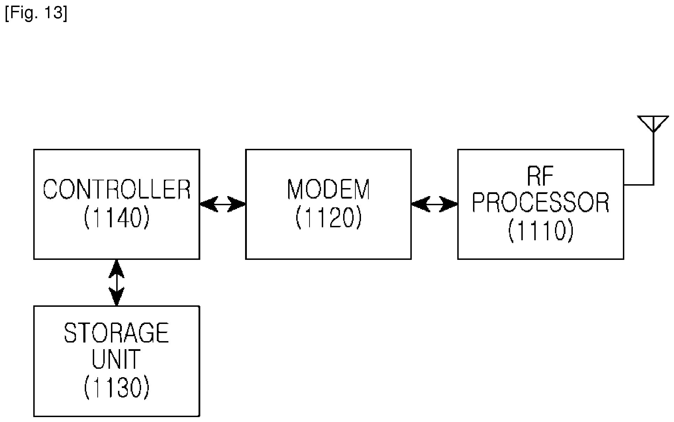

FIG. 13 illustrates a block diagram of a UE in a mobile communication system according to an embodiment of the present invention.

Referring to FIG. 13, the small BS includes a Radio Frequency (RF) processor 1110, a modem 1120, a storage unit 1130 and a controller 1140.

The RF processor 1110 performs functions, such as signal band converting and amplification, to transmit and receive signals over a radio channel. That is, the RF processor 1110 up-converts a baseband signal output from the modem 1120 to the RF signal and transmits the RF signal over an antenna, and down-converts the RF signal received over the antenna to the baseband signal. For example, the RF processor 1110 may include an amplifier, a mixer, an oscillator, a Digital to Analog Convertor (DAC), a Analog to Digital Convertor (ADC) and so on.

The modem 1120 converts the baseband signal and a bit string according to a physical layer standard of the system. For example, to transmit data, the modem 1120 generates complex symbols by encoding and modulating the transmit bit string, maps the complex symbols to subcarriers, and constitutes OFDM symbols by applying Inverse Fast Fourier Transform (IFFT) and inserting a Cyclic Prefix (CP). When receiving data, the modem 1120 splits the baseband signal output from the RF processor 1110 to OFDM symbols, restores the signals mapped to the subcarriers using FFT, and restores the receive bit string by demodulating and decoding the signals. For example, the modem 1120 may include a structure as illustrated in FIGs 6 and 7, FIG. 10, or FIG. 12.

The storage unit 1130 stores program codes and system information required for the operations of the UE. The storage unit 1130 provide stored data to the controller 1140 upon a request from the controller 1140.

The controller 1140 controls the functions of the UE. For example, the controller 1140 generates a transmit packet and a message and provides the modem 1120 with the transmit packet and the message. And, the controller 1140 processes a receive packet and a message from the modem 1120. More particularly, according to an exemplary embodiment of the present invention, the controller 1140 controls ructions to transmit the SR information and other uplink control information. For example, the controller 1140 controls so that the UE operates as illustrated in one of FIG. 4 to FIG. 12.

As can be seen from the above technical scheme, in the embodiments of the present invention, when transmitting the SR information and other uplink control information in the same subframe, the UE returns the SR information to the BS by using physical resources on other non SR channel for transmitting the other uplink control information, that is to say, the UE does not return the SR information to the BS by using a special SR channel, but return the SR information to the BS by using physical resources on other non SR channel for transmitting the other uplink control information, which obviously ensure a low CM characteristic of an uplink CC when the SR, ACK/NACK or CQI information is returned to the BS.

**Claims**

1. A method performed by a user equipment, LTE, for transmitting an uplink scheduling request, SR, the method comprising:

   identifying whether SR information is a positive SR or a negative SR;
   generating uplink control information including a bit for SR information and at least one other bit for acknowledgement, ACK/non-ACK, NACK, information;
   if the SR information is the negative SR, transmitting the uplink control information by using an ACK/NACK channel constructed according to a cyclic shift index and an orthogonal sequence index to a base station, BS, through a control channel; and
   if the SR information is the positive SR, reconfiguring the orthogonal sequence index and transmitting the uplink control information by using the ACK/NACK channel constructed according to the cyclic shift index and the reconfigured orthogonal sequence index to the BS through the control channel.

2. The method of claim 1, wherein the uplink control information is transmitted through the control channel based on resources for the ACK/NACK information configured to the UE.

3. The method of claim 1, further comprising:
configuring a value of an orthogonal sequence index.

4. The method of claim 3, wherein the orthogonal sequence is configured to a fixed value being [-1 +1 -1 +1].

5. A user equipment, UE, for transmitting an uplink scheduling request, SR, comprising:

at least one transceiver; and
at least one processor configured to:

identify whether SR information is a positive SR or a negative SR;
generate uplink control information including a bit for SR information and at least one other bit for acknowledgement, ACK/non-ACK, NACK, information;
if the SR information is the negative SR, transmit the uplink control information by using an ACK/NACK channel constructed according to a cyclic shift index and an orthogonal sequence index to a base station, BS, through a control channel; and
if the SR information is the positive SR, reconfigure the orthogonal sequence index and transmit the uplink control information by using the ACK/NACK channel constructed according to the cyclic shift index and the reconfigured orthogonal sequence index to the BS through the control channel.

6. The UE of claim 5, wherein the uplink control information is transmitted through the control channel based on resources for the ACK/NACK information configured to the UE.

7. The UE of claim 5, further comprising:
configuring a value of an orthogonal sequence index.

8. The UE of claim 7, wherein the orthogonal sequence is configured to a fixed value being [-1 +1 -1 +1].

**Patentansprüche**

1. Verfahren, das von einem Benutzergerät, UE, zum Übertragen einer Uplink-Planungsanfrage, SR, ausgeführt wird, wobei das Verfahren Folgendes umfasst:

Identifizieren, ob SR-Informationen eine positive SR oder eine negative SR sind;
Erzeugen von Uplink-Steuerungsinformationen einschließlich eines Bits für SR-Informationen und mindestens eines anderen Bits für Bestätigungs(ACK)/Nicht-ACK(NACK)-Informationen;
wenn die SR-Informationen die negative SR sind, Übertragen der Uplink-Steuerungsinformationen unter Verwenden eines ACK/NACK-Kanals, der gemäß einem zyklischen Verschiebungsindex und einem orthogonalen Sequenzindex konstruiert wurde, an eine Basisstation, BS, über einen Steuerkanal; und
wenn die SR-Informationen die positive SR sind, Neukonfigurieren des orthogonalen Sequenzindex und Übertragen der Uplink-Steuerungsinformationen unter Verwenden des ACK/NACK-Kanals, der gemäß dem zyklischen Verschiebungsindex und dem neukonfigurierten orthogonalen Sequenzindex konstruiert wurde, an die BS über den Steuerkanal.

2. Verfahren nach Anspruch 1, wobei die Uplink-Steuerungsinformationen über den Steuerkanal basierend auf Ressourcen für die ACK/NACK-Informationen übertragen werden, die für das UE konfiguriert sind.

3. Verfahren nach Anspruch 1, das ferner Folgendes umfasst:
Konfigurieren eines Wertes eines orthogonalen Sequenzindex.

4. Verfahren nach Anspruch 3, wobei die orthogonale Sequenz auf einen festen Wert von [-1 +1 -1 +1] konfiguriert ist.

**5.** Benutzergerät, UE, zum Übertragen einer Uplink-Planungsanfrage, SR, das Folgendes umfasst:

mindestens einen Transceiver; und
mindestens einen Prozessor, der konfiguriert ist zum:

Identifizieren, ob SR-Informationen eine positive SR oder eine negative SR sind;
Erzeugen von Uplink-Steuerungsinformationen einschließlich eines Bits für SR-Informationen und mindestens eines anderen Bits für Bestätigungs(ACK)/Nicht-ACK(NACK)-Informationen;
wenn die SR-Informationen die negative SR sind, Übertragen der Uplink-Steuerungsinformationen unter Verwenden eines ACK/NACK-Kanals, der gemäß einem zyklischen Verschiebungsindex und einem orthogonalen Sequenzindex konstruiert wurde, an eine Basisstation, BS, über einen Steuerkanal; und
wenn die SR-Informationen die positive SR sind, Neukonfigurieren des orthogonalen Sequenzindex und Übertragen der Uplink-Steuerungsinformationen unter Verwenden des ACK/NACK-Kanals, der gemäß dem zyklischen Verschiebungsindex und dem neukonfigurierten orthogonalen Sequenzindex konstruiert wurde, an die BS über den Steuerkanal.

**6.** UE nach Anspruch 5, wobei die Uplink-Steuerungsinformationen über den Steuerkanal basierend auf Ressourcen für die ACK/NACK-Informationen übertragen werden, die für das UE konfiguriert sind.

**7.** UE nach Anspruch 5, das ferner Folgendes umfasst:
Konfigurieren eines Wertes eines orthogonalen Sequenzindex.

**8.** UE nach Anspruch 7, wobei die orthogonale Sequenz auf einen festen Wert von [-1 +1 -1 +1] konfiguriert ist.

**Revendications**

**1.** Procédé effectué par un équipement d'utilisateur, UE, pour transmettre une demande de programmation, SR, de liaison montante, le procédé comprenant :

identifier si des informations de SR sont une SR positive ou une SR négative ;
générer des informations de commande de liaison montante comprenant un bit pour des informations de SR et au moins un autre bit pour des informations d'accusé de réception ACK/non ACK, NACK ;
si les informations de SR sont la SR négative, transmettre les informations de commande de liaison montante en utilisant un canal ACK/NACK construit selon un indice de décalage cyclique et un indice de séquence orthogonale à une station de base, BS, via un canal de commande ; et
si les informations de SR sont la SR positive, reconfigurer l'indice de séquence orthogonale et transmettre les informations de commande de liaison montante en utilisant le canal ACK/NACK construit selon l'indice de décalage cyclique et l'indice de séquence orthogonale reconfiguré à la BS via le canal de commande.

**2.** Procédé selon la revendication 1, où les informations de commande de liaison montante sont transmises via le canal de commande sur la base de ressources pour les informations d'ACK/NACK configurées à l'UE.

**3.** Procédé selon la revendication 1, comprenant en outre :
configurer une valeur d'un indice de séquence orthogonale.

**4.** Procédé selon la revendication 3, où la séquence orthogonale est configurée à une valeur fixe étant [-1 +1 -1 +1].

**5.** Équipement utilisateur, UE, pour transmettre une demande de programmation, SR, de liaison montante, comprenant :

au moins un émetteur-récepteur ; et
au moins un processeur configuré pour :

identifier si des informations de SR sont une SR positive ou une SR négative ;
générer des informations de commande de liaison montante comprenant un bit pour des informations de SR et au moins un autre bit pour des informations d'accusé de réception ACK/non ACK, NACK ;
si les informations de SR sont la SR négative, transmettre les informations de commande de liaison montante en utilisant un canal ACK/NACK construit selon un indice de décalage cyclique et un indice de séquence orthogonale à une station de base, BS, via un canal de commande ; et
si les informations de SR sont la SR positive, reconfigurer l'indice de séquence orthogonale et transmettre les informations de commande de liaison montante en utilisant le canal ACK/NACK construit selon l'indice de décalage cyclique et l'indice de séquence orthogonale reconfiguré à la BS via le canal de commande.

6. UE selon la revendication 5, où les informations de commande de liaison montante sont transmises via le canal de commande sur la base de ressources pour les informations d'ACK/NACK configurées à l'UE.

7. UE selon la revendication 5, comprenant en outre :
configurer une valeur d'un indice de séquence orthogonale.

8. UE selon la revendication 7, où la séquence orthogonale est configurée à une valeur fixe étant [-1 +1 -1 +1].

[Fig. 1]

1 TIME SLOT = 0.5 millisecond

SEQUENCE 1

SEQUENCE 2

A

ACK/NACK SYMBOL

CAZAC

IFFT   IFFT   IFFT   IFFT

$W_0$   $W_1$   $W_2$   $W_3$

RS   RS   RS

1 TIME SLOT = 0.5 millisecond

B

[Fig. 2]

[Fig. 3]

BAND1 BAND2

1:2

1:3

1:4

CC CONFIGURATION 1

BAND1 BAND2

2:2

2:3

CC CONFIGURATION 2

CC IN BAND1

CC IN BAND2

[Fig. 4]

```
           ┌──────────────┐
           │    START     │
           └──────┬───────┘
                  ▼
  ┌───────────────────────────────┐
  │      UE ABTAINS SR SUBFRAME   │
  │    CONFIGURATION OF THE UE BY │ ~301
  │   RECEIVING HIGHER LAYER SIGNALING │
  └───────────────┬───────────────┘
                  ▼
  ┌───────────────────────────────┐
  │    IN CASE THE TRANSMISSION OF SR │
  │    INFORMATION CONINCIDES IN TIME │
  │   WITH THE TRANSMISSION OF THE OTHER │
  │   UPLINK CONTROL INFORMATION, THE UE │ ~303
  │    RETURNS THE SR INFORMATION TO AN  │
  │   eNB BY USING PHYSICAL RESOURCES OF │
  │       OTHER NON SR CHANNEL FOR       │
  │      TRANSMITTING THE OTHER UPLINK   │
  │         CONTROL INFORMATION          │
  └───────────────┬───────────────┘
                  ▼
           ┌──────────────┐
           │     END      │
           └──────────────┘
```

[Fig. 5]

```
                    ┌─────────────┐
                    │    START    │
                    └──────┬──────┘
                           │
                           ▼
    ┌──────────────────────────────────────────────┐
    │  THE UE MAPS THE SR INFORMATION AS 1-bit      │ ⌐401
    │           INFORMATION : s₀                     │
    └──────────────────────┬───────────────────────┘
                           │
                           ▼
    ┌──────────────────────────────────────────────┐
    │  THE UE MAKES bit STREAM OF THE ACK/NACK      │ ⌐403
    │   INFORMAION a₀,a₁,···,a_{A-2} AND THE s₀      │
    │              CONCATENATED                      │
    └──────────────────────┬───────────────────────┘
                           │
                           ▼
    ┌──────────────────────────────────────────────┐
    │  REED-MULLER CODING PROCESSING OF (20,A)      │ ⌐405
    │   IS PERFORMED FOR THE CONCATENATED bit       │
    │   STREAM; QUATERNARY PHASE SHIFT KEYING       │
    │   (QPSK) MODULATION IS ADOPTED, AND THE       │
    │   CODED bit STREAM IS SENT TO THE eNB BY      │
    │   USING A STRUCTURE OF UPLINK CONTROL         │
    │   CHANNEL FORMAT 2 IN THE LTE SYSTEM          │
    └──────────────────────┬───────────────────────┘
                           │
                           ▼
                    ┌─────────────┐
                    │     END     │
                    └─────────────┘
```

[Fig. 6]

[Fig. 7]

EP 2 556 610 B1

[Fig. 8]

```
                    ┌─────────────┐
                    │    START    │
                    └──────┬──────┘
                           ▼
    ┌─────────────────────────────────────────┐
    │  THE UE FIRSTLY SOLELY DERERMINES        │
    │  ACK/NACK CHANNEL PARAMETERS (n_cs,n_oc) │─601
    │  FOR RETURNING THE ACK/NACK              │
    │  INFORMATION                             │
    └─────────────────────┬───────────────────┘
                           ▼
    ┌─────────────────────────────────────────┐
    │  THE UE OBTAINS THAT THE POSITIVE SR     │
    │  NEEDS TO BE SENT IN THE SUBFRAME 3,     │─603
    │  AND THE UE RECONFIGURES THE             │
    │  ACK/NACK CHANNEL PARAMETERS             │
    └─────────────────────┬───────────────────┘
                           ▼
    ┌─────────────────────────────────────────┐
    │  THE UE SENDS THE ACK/NACK               │
    │  INFORMATION IN A NEW ACK/NACK           │
    │  CHANNEL CONSTRUCTED ACCORDING TO        │─605
    │  THE RECONFIGURED ACK/NACK CHANNEL       │
    │  PARAMETERS                              │
    └─────────────────────┬───────────────────┘
                           ▼
                    ┌─────────────┐
                    │     END     │
                    └─────────────┘
```

[Fig. 9]

| | CS0 | CS1 | CS2 | CS3 | CS4 | CS5 | CS6 | CS7 | CS8 | CS9 | CS10 | CS11 |
|---|---|---|---|---|---|---|---|---|---|---|---|---|
| 0 → CODE 0 | ACK0 | | | ACK1 | | | ACK2 | | | ACK3 | | |
| 1 → CODE 1 | | ACK4 | | | ACK5 | | | ACK6 | | | ACK7 | |
| 2 → CODE 2 | | | ACK8 | | | ACK9 | | | ACK10 | | | ACK11 |
| 3 → CODE 3 | SR0 | SR1 | SR2 | SR3 | SR4 | SR5 | SR6 | SR7 | SR8 | SR9 | SR10 | SR11 |

$n_{oc}$

[Fig. 10]

[Fig. 11]

START

WHEN TRANSMITTING THE SR INFORMAION AND CQI INFORMATION IN THE SAME SUBFRAME, THE UE PERFORMS CODING MODULATION FOR THE SR INFORMATION AND GENERATES A SR MODULATION SYMBOL $d_{SR}$ ~901

THE SECOND REFERENCE SYMBOL OF EACH CQI TIME SLOT IS MODULATED BY USING SINGLE SR MODULATION SYMBOL ~903

END

[Fig. 12]

CQI INFORMATION

BLOCK CODE ~1020

QPSK ~1030

1bit SR INFORMATION

BPSK ~1010

$b_0$   $b_1$   $b_2$   $b_3$   $b_4$   $b_5$   $b_6$   $b_7$   $b_8$   $b_9$

1040

IFFT   IFFT   IFFT   IFFT   IFFT   IFFT   IFFT

1 TIME SLOT = 0.5 millisecond

RS          RS

TIME SLOT #2

RS          RS

TIME SLOT #1

EP 2 556 610 B1

[Fig. 13]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090196247 A
- US 20090274100 A
- US 2009020189 A

**Non-patent literature cited in the description**

- **HUAWEI et al.** Multiplexing of Scheduling Request Indicator. *3GPP DRAFT; R1-073521 MULTIPLEXING OF SCHEDULING REQUEST INDICATOR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,* 15 August 2007, vol. RAN WG1 (Athens